# EUROPÄISCHE PATENTANMELDUNG

(11) **EP 0 643 024 A2**
(43) Veröffentlichungstag der Anmeldung: **15.03.1995**
(21) Anmeldenummer: 94114180.6
(22) Anmeldetag: 09.09.1994
(51) Int. Cl.: C04B 35/80, C04B 35/573, C04B 38/00, C04B 35/58

(54) **Poröse Formkörper aus Siliziumkarbid**

(30) Priorität: 15.09.1993 DE 4331305
(71) Anmelder: ABB PATENT GmbH, D-68309 Mannheim (DE)
(72) Erfinder: Schulten, Rudolf, Prof. Dr., D-52072 Aachen (DE); Lorson, Harald, D-52080 Aachen (DE); Kusnanto, D-52064 Aachen (DE); Sahabi, Behzad, D-52070 Aachen (DE)
(74) Vertreter: Rupprecht, Klaus, Dipl.-Ing.

(57) **Zusammenfassung**

Die Erfindung betrifft faserverstärkte poröse Formkörper aus Siliziumkarbid sowie ein Verfahren zu ihrer Herstellung, wobei zunächst die zur Einlagerung vorgesehenen Fasern bei Temperaturen zwischen 500°C und 1500°C, vorzugsweise zwischen 600°C und 1200°C unter Vakuum oder in Inertgasatmosphäre, z. B. Argon, pyroylisiert werden, die so behandelten Fasern mit einem Kieselsäureester oder mit feinkörnigem Siliziumdioxid ummantelt werden und anschließend einer Wärmebehandlung bei 900°C bis 1300°C unterzogen werden, bei welcher das auf der Faseroberfläche befindliche Siliziumdioxid in eine Siliziumkarbidschicht umgewandelt wird, daß danach die so beschichteten Fasern mit Binder, Silizium und Siliziumkarbid-Pulver unterschiedlicher Korngröße vermengt und gleichmäßig aufgemischt werden, und wobei das so erhaltene Gemisch in eine hierfür vorgesehene Form gegeben wird und bei ca. 130°C bis 180°C ausgehärtet wird und die ausgehärteten Formkörper bei 800°C bis 1200°C pyrolysiert wird.

## Beschreibung

Die Erfindung betrifft faserverstärkte poröse Formkörper aus Siliziumkarbid sowie ein Verfahren zu ihrer Herstellung.

Einhergehend mit dem Einsatz thermischer Maschinen und Apparate stellt sich häufig die Frage nach einer geeigneten Wärmeschutzverkleidung, da entweder die Umgebung gegen die Strahlungswärme der betreffenden Maschine bzw. des Apparates geschützt werden muß oder ein unerwünschter Wärmeabfluß verhindert werden soll.

Abhängig vom jeweiligen Temperaturniveau gelangen hierfür unterschiedliche Materialien zum Einsatz. So erfolgt beispielsweise die Wärmeisolierung von Kesselanlagen häufig mittels Glas- oder Steinwolle in Platten, Blöcken oder in loser Form. Bisweilen werden solche Isolierkörper auch als formangepaßte Formlinge eingesetzt. Mit zunehmender Temperatur der zu isolierenden Wärmequelle resultiert das Problem, daß die allgemein bekannten Isolierwerkstoffe entweder unzureichende Temperaturstabilität aufweisen oder daß sie, temperaturbedingt, ihre Form verlieren und zusammenfallen, so daß die ursprüngliche Porosität und damit ihre thermische Isolierwirkung verlorengeht.

Ausgehend von diesem Stand der Technik ist es Aufgabe der Erfindung, einen hochtemperaturfesten Formkörper zu schaffen, der eine niedrige Wärmeleitfähigkeit, eine gute Wärmekapazität und eine gute Temperaturwechselbeständigkeit aufweist. Darüberhinaus soll auch ein Verfahren zu seiner Herstellung angegeben werden.

Diese Aufgabe wird erfindungsgemäß durch die Merkmale der Patentansprüche 1 und 6 gelöst. Danach ist der Isolierkörper in an sich bekannter Weise als Formkörper ausgebildet, der im wesentlichen aus einer Siliziumkarbid-Matrix besteht, in welche Fasern eingelagert sind. Entsprechend der Erfindung sind hierbei zur Einlagerung in die Siliziumkarbid-Matrix Naturfasern vorgesehen. Diese Naturfasern können wahlweise die Fasern langstieliger Gräser und/oder der Halme von Getreidepflanzen sein. Auch kann es vorteilhaft sein, als Naturfasern solche Fasern aus Sisal und/oder Jute bzw. Baumwolle und/oder Viskose zu verwenden.

Entsprechend einer bevorzugten Ausführungsform eines solchen erfindungsgemäßen Formkörpers können die zur Einlagerung vorgesehenen Fasern als Gewebe ausgebildet sein, welches in der Siliziumkarbid-Matrix eingelagert ist.

Vorteilhafterweise weist ein erfindungsgemäßer Formkörper wenigstens zwei Gewebelagen in der Siliziumkarbid-Matrix auf.

Ein Verfahren zur Herstellung eines solchen Formkörpers mit einer Siliziumkarbid-Matrix, in welcher Fasern eingelagert sind, die zum Aufbau eines lockeren Gefüges sowie zur Erhöhung der mechanischen Stabilität beitragen ist entsprechend Patentanspruch 6 dadurch gekennzeichnet, daß
1. die zur Einlagerung vorgesehenen Fasern bei Temperaturen zwischen 500°C und 1500°C, vorzugsweise zwischen 600°C und 1200°C unter Vakuum oder unter Schutzgasatmosphäre, z. B. Argon, pyrolysiert werden, daß
2. die so behandelten Fasern mit einem Kieselsäureester oder mit feinkörnigem Siliziumdioxid ummantelt werden, daß
3. die ummantelten Fasern einer Wärmebehandlung bei 900°C bis 1300°C, vorzugsweise 1200°C unterzogen werden, bei welcher das auf der Faseroberfläche befindliche Siliziumdioxid in eine Siliziumkarbidschicht umgewandelt wird, daß
4. die so beschichteten Fasern gemeinsam mit Binder, Silizium und Siliziumkarbid-Pulver unterschiedlicher Korngröße vermengt und gleichmäßig aufgemischt werden, daß
5. das so erhaltene Gemisch in eine hierfür vorgesehene Form gegeben wird und bei einer Temperatur von ca. 120°C bis 200°C, vorzugsweise 130°C bis 180°C, ausgehärtet wird und daß
6. die ausgehärteten Formkörper bei 800°C bis 1200°C pyrolysiert werden.

Der entsprechend den vorbeschriebenen Verfahrensschritten erhaltene Formkörper kann in zweckmäßiger Weiterbildung der Erfindung durch Einsatz mechanischer Mittel auf das Fertigmaß bearbeitet werden.

Im Hinblick auf erhöhte Anforderungen an die mechanische Festigkeit im Hochtemperaturbereich kann in vorteilhafter Weiterbildung des erfindungsgemäßen Verfahrens vorgesehen sein, daß anstelle von Siliziumkarbid-Pulver ein anderes hochschmelzendes Pulver, z. B. Molybdändisilizid-Pulver, in die Pulvermischung zugegeben wird, wodurch die Hochtemperaturfestigkeit des Formkörpers verbessert wird.

Durch die gemäß Schritt Nr. 3 vorgesehene Siliziumkarbid-Schicht, die ca. 10 µm Schichtdicke aufweist, wird bei einer ggf. anschließend vorgesehenen Silizierung des Formkörpers die Zerstörung bzw. Rekristallisation der Faser verhindert.

Eine weitere Möglichkeit, die Formbeständigkeit des nach dem erfindungsgemäßen Verfahren hergestellten Formkörpers zu verbessern, kann darin bestehen, den Formkörper mit einer Schutzschicht zu versehen, welche in weiterer Ausgestaltung des erfindungsgemäßen Verfahrens durch Silizieren erzeugt wird. Diese Schutzschicht kann sowohl mittels Eigensilizierung als auch mittels Fremdsilizierung sowie durch eine Kombination beider Verfahren erzeugt werden.

Bei der Eigensilizierung wird die Schutzschicht unter Heranziehung von im Formkörper eingelagertem Siliziumkarbid-Pulver erzeugt, wobei die Infiltration des Silizium bei einer Temperatur von 1500°C bis 1700°C durchgeführt wird. Hierbei wird der im Formkörper befindliche Kohlenstoff zu Siliziumkarbid umgesetzt.

Bei der Fremdsilizierung, welches Verfahren Gegenstand der deutschen Patentanmeldung P 42 03 773.5 ist, erfolgt die Schutzschichtbildung durch Zuführung von flüssigem Silizium von außen. Bei der Fremdsilizierung mit Siliziumpulver wird eine Mischung eines Kohlenwasserstoffs mit Siliziumpulver und Wasser als Paste auf den Formkörper aufgebracht und der mit der Paste umhüllte Formkörper bei Temperaturen zwischen 800°C und 1000°C pyrolysiert. Auch hierbei erfolgt anschließend durch Infiltration bei einer Temperatur von 1500°C bis 1700°C eine Umsetzung des von außen zugeführten Siliziums mit dem im Formkörper befindlichen Kohlenstoff zu Siliziumkarbid.

Das zuvor erwähnte Ausgangsgemisch weist einen Anteil von etwa bis 50 Gew.-% an Siliziumkarbid, von 5- bis 20 Gew.-% eines kohlenstoffhaltigen Binders und einen Faseranteil bis zu 50 Vol.-% auf. Die Länge der eingesetzten Fasern richtet sich hierbei einerseits nach der Art der Faser und andererseits nach den Abmessungen und der Form des Formkörpers.

Gemäß einer weiteren vorteilhaften Ausgestaltung des erfindungsgemäßen Verfahrens ist vorgesehen, daß die Porosität der Matrix, in welche die Fasern eingelagert werden, durch den Einsatz eines keramischen Aufschäummittels beeinflußt wird.

Ferner kann entsprechend einer vorteilhaften Weiterbildung der Erfindung durch die Verwendung eines wasserlöslichen Binders sowie durch Einsatz eines hochtourigen Rührwerks die Porosität gesteigert werden. Daneben kann auch der Einsatz herkömmlicher Methoden zur Erzeugung eines porösen Körpers in Betracht kommen. Hierzu gehört auch die Möglichkeit, in dem Formkörper Materialien einzulagern, welche bei einer Temperaturbehandlung unter Luft verbrennen oder verdampfen. Die hierbei entstehenden Fehlstellen führen dann zu der Porosität in dem gewünschten Maß. Beispielsweise kann man hier die Einlagerung von Siliziumkarbidkörpern verschiedener Geometrien anführen. Welche im Inneren einen Kohlenstoffkern aufweisen und bei einer Temperaturbehandlung unter Luft ausbrennen. Zurück bleiben dann Hohlkörper aus Siliziumkarbid.

Um den Einsatz der Formkörper, die entsprechend dem oben beschriebenen Verfahren hergestellt wurden, in abrasiven Medien zu ermöglichen, kann es zweckmäßig sein, die Formkörper zumindest bereichsweise mit einem aus Siliziumkarbid bestehenden Schlicker zu beschichten. Dieser Siliziumkarbid-Schlicker besteht zu etwa 5- bis 10 Gew.-% aus Binder, zu etwa 2- bis 15 Gew.-% aus Kohlenstoff, zu etwa 50- bis 80 Gew.-% aus Siliziumkarbid-Pulver sowie einem geeigneten Lösungsmittel. Die Schichtdicke beträgt in Abhängigkeit des Mediums und des Einsatzortes 0,5 bis 2 mm.

Nach der Aufbringung des Schlickers wird der Formkörper bei Temperaturen von 800°C bis 1200°C unter Vakuum oder in Inertgasatmosphäre pyrolysiert. Im Anschluß an diese Temperaturbehandlung wird der mit Schlicker beschichtete Formkörper siliziert. Hierbei erfolgt die Silizierung vorzugsweise durch Fremdsilizierung nach dem oben beschriebenen Pastenverfahren. Die Infiltrationstemperaturen liegen hierbei zwischen 1500°C und 1700°C.

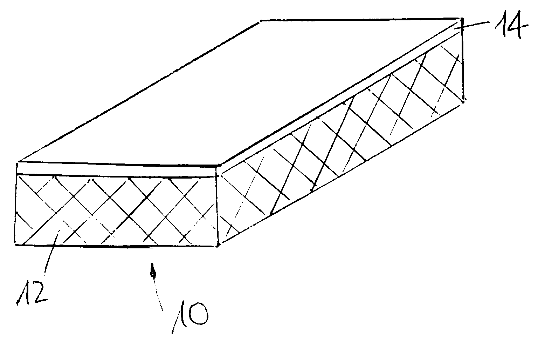

Anhand eines in der Zeichnung dargestellten Ausführungsbeispieles sollen die Erfindung, vorteilhafte Ausgestaltungen und besondere Vorteile und Verbesserungen der Erfindung näher erläutert und beschrieben werden.

Es zeigt die einzige Figur einen Formkörper gemäß der Erfindung.

In der einzigen Figur ist ein Formkörper 10 gezeigt, der quaderförmig gestaltet ist und einen ersten Bereich 12 aus einer porösen Matrix und einen zweiten Bereich 14 aus Siliziumkarbid aufweist.

Der erste Bereich 12 ist im vorliegenden Fall aus pyrolysierton Viskosefäden gebildet, die mit aus Siliziumkarbid bestehender Schlickermasse imprägniert sind. Dieser so gebildete erste Bereich besitzt eine Dichte ρ von etwa 0,3 bis 0,6 g/cm³ und eine Wärmeleitzahl von etwa 1,1 W/m·k.

Der zweite Bereich 14 ist als Deckschicht ausgebildet und besteht aus Siliziumkarbid mit unterschiedlichen Korngrößen, dessen Dichte ρ bei 1,7 bis 2,5 g/cm³ liegt.

Die Größe der Formkörper kann unterschiedlich gewählt werden. Vorteilhafterweise jedoch werden die erfindungsgemäßen Formkörper in der Größe 7 mal 5 cm² mit etwa 2,5 cm Dicke vorgesehen, da hiermit die Herstellsicherheit gewährleistet ist und die für eine Wärmeisolierung infrage kommenden Komponenten hiermit gut versehen werden können. Die Schichtdicke der Schutzschicht beträgt dabei etwa 0,5 cm.

## Patentansprüche

1. Formkörper, bestehend aus einer Siliziumkarbid-Matrix, in welche Fasern eingelagert sind, dadurch gekennzeichnet, daß zur Einlagerung in die Siliziumkarbid-Matrix Naturfasern vorgesehen sind.

2. Formkörper nach Anspruch 1, dadurch gekennzeichnet, daß als Naturfasern die Fasern langstieliger Gräser und/oder der Halme von Getreidepflanzen und/oder Fasern aus Sisal und/oder aus Jute und/oder aus Baumwolle und/oder Viskose vorgesehen sind.

3. Formkörper nach Anspruch 1 oder 2, dadurch gekennzeichnet, daß die zur Einlagerung vorgesehenen Fasern als Gewebe ausgebildet sind, welches in der Siliziumkarbid-Matrix eingelagert ist.

4. Formkörper nach Anspruch 3, dadurch gekennzeichnet, daß wenigstens zwei Gewebelagen vorgesehen sind.

5. Formkörper ach einem der vorherigen Ansprüche, dadurch gekennzeichnet, daß der Formkörper eine durch Silizieren erzeugte Schutzschicht aufweist.

6. Verfahren zur Herstellung eines Formkörpers gemäß den Ansprüchen 1 bis 5, mit einer Siliziumkarbid-Matrix, in welche Fasern eingelagert sind, welche zum Aufbau eines lockeren Gefüges sowie zur Erhöhung der mechanischen Stabilität des Formkörpers beitragen, dadurch gekennzeichnet, daß zunächst die zur Einlagerung vorgesehenen Fasern bei Temperaturen zwischen 500°C und 1500°C, vorzugsweise zwischen 600°C und 1200°C unter Vakuum oder in Inertgasatmosphäre, z. B. Argon, pyrolysiert werden, daß die so behandelten Fasern mit einem Kieselsäureester oder mit feinkörnigem Siliziumdioxid ummantelt werden und anschließend einer Wärmebehandlung bei 900°C bis 1300°C unterzogen werden, bei welcher das auf der Faseroberfläche befindliche Siliziumdioxid in eine Siliziumkarbidschicht umgewandelt wird, daß danach die so beschichteten Fasern mit Binder, Silizium und Siliziumkarbid-Pulver unterschiedlicher Korngröße vermengt und gleichmäßig aufgemischt werden, daß das so erhaltene Gemisch in eine hierfür vorgesehene Form gegeben wird und bei ca. 130°C bis 180°C ausgehärtet wird und daß die ausgehärteten Formkörper bei 800°C bis 1200°C pyrolysiert wird.

7. Verfahren nach Anspruch 6, dadurch gekennzeichnet, daß anstelle von Siliziumkarbid-Pulver ein anderes hochschmelzendes Pulver, z. B. Molybdändisilizid-Pulver, in die Pulvermischung zugegeben wird zwecks Erhöhung der mechanischen Festigkeit des Formkörpers im Hochtemperaturbereich.

8. Verfahren nach Anspruch 6 oder 7, dadurch gekennzeichnet, daß nach der abschließenden Pyrolysebehandlung der Formkörper auf das gewünschte Fertigmaß bearbeitet wird.

9. Verfahren nach einem der Ansprüche 6 bis 8, dadurch gekennzeichnet, daß der Formkörpermit einer Schutzschicht versehen wird, welche durch Silizieren erzeugt wird.

10. Verfahren nach Anspruch 9, dadurch gekennzeichnet, daß die Schutzschicht durch Eigensilizieren unter Heranziehung von im Formkörper eingelagertem Siliziumpulver erzeugt wird.

11. Verfahren nach Anspruch 9, dadurch gekennzeichnet, daß die Schutzschicht durch Fremdsilizieren unter Zuführung von flüssigem oder pastösem Silizium von außen erzeugt wird.

12. Verfahren nach Anspruch 9, dadurch gekennzeichnet, daß die Schutzschicht durch die Kombination von Eigensilizieren unter Heranziehung von im Formkörper eingelagertem Siliziumpulver und durch Fremdsilizieren unter Zuführung von flüssigem oder pastösem Silizium von außen erzeugt wird.

13. Verfahren nach Anspruch 11 oder 12, dadurch gekennzeichnet, daß bei der Fremdsilizierung mit pastösem Siliziumpulver eine Mischung eines Kohlenwasserstoffs mit Siliziumpulver und Wasser als Paste auf den Formkörper aufgebracht wird, daß der mit der Paste umhüllte Formkörper bei Temperaturen zwischen 800°C und 1000°C pyrolysiert wird und in einer sich anschließenden Temperaturbehandlung bei Temperaturen oberhalb des Schmelzpunktes von Silizium der Formkörper mit flüssigem Silizium infiltriert wird.

14. Verfahren nach einem der Ansprüche 6 bis 13, dadurch gekennzeichnet, daß zur Steigerung der Porosität des Formkörpers Aufschäummittel vorgesehen sind, welche ebenfalls in der Siliziumkarbid-Matrix eingelagert sind.

15. Verfahren nach einem der Ansprüche 6 bis 14, dadurch gekennzeichnet, daß auf den Formkörper ein aus Siliziumkarbid verschiedener Korngrößen, aus Silizium, Kohlenstoff und aus Binder bestehender Siliziumkarbid-Schlicker aufgebracht wird, um die Verschleißfestigkeit der Oberfläche des Formkörpers zu verbessern.
